Europäisches Patentamt

European Patent Office

Office européen des brevets

(19)

(11) Numéro de publication: **0 161 976**
**B1**

(12) **FASCICULE DE BREVET EUROPEEN**

(45) Date de publication du fascicule du brevet: **07.12.88**

(51) Int. Cl.⁴: **G 21 C 7/14**

(21) Numéro de dépôt: **85400789.5**

(22) Date de dépôt: **22.04.85**

(54) **Dispositif d'accouplement entre un organe moteur et un organe récepteur.**

(30) Priorité: **27.04.84 FR 8406691**

(43) Date de publication de la demande:
**21.11.85 Bulletin 85/47**

(45) Mention de la délivrance du brevet:
**07.12.88 Bulletin 88/49**

(84) Etats contractants désignés:
**BE DE GB IT**

(56) Documents cités:
**EP-A-0 093 055**
**DE-A-2 608 304**
**GB-A-2 029 078**

(73) Titulaire: **COMMISSARIAT A L'ENERGIE ATOMIQUE**
**31/33, rue de la Fédération**
**F-75015 Paris (FR)**

(72) Inventeur: **Guillot, Jean-François**
**14, rue Abbé de l'Epée**
**F-13090 Aix en Provence (FR)**

(74) Mandataire: **Mongrédien, André et al**
**c/o BREVATOME 25, rue de Ponthieu**
**F-75008 Paris (FR)**

EP 0 161 976 B1

## Description

L'invention concerne un dispositif d'accouplement permettant la transmission d'un mouvement sans désaxage ni perte de couple dans les deux sens lorsque l'organe récepteur est mis en mouvement par l'organe moteur et la transmission de mouvement sans désaxage ni perte de couple dans un seul sens lorsque les rôles des organes moteurs et récepteurs sont inversés; ainsi la transmission du mouvement de l'organe récepteur à l'organe moteur est bloquée après rotation d'une fraction de tour de l'organe récepteur. Le déblocage peut être obtenu soit par la mise en mouvement de l'organe moteur par l'organe récepteur dans le seul sens de manoeuvre possible, soit par la commande du mouvement dans un sens ou dans l'autre par l'organe moteur. Plus particulièrement, l'invention concerne un dispositif d'accouplement conforme au préambule de la revendication 1.

On connaît déjà un grand nombre de dispositifs de transmission d'un mouvement de rotation entre un organe moteur et un organe récepteur. Ces dispositifs s'appliquent notamment à la commande de barres de contrôle de réacteurs nucléaires. On connaît (GB—A—2 029 078 ou FR—A—2 432 197) un dispositif de commande d'une barre de contrôle d'un réacteur nucléaire muni de sécurités contre l'éjection et le chavirement de ce type. Il comporte un mécanisme de commande de la translation de la barre de contrôle logé dans une enceinte étanche solidaire du couvercle de la cuve du réacteur, des moyens anti-éjection de la barre de contrôle et enfin des moyens de commande des moyens anti-éjections sensibles à une cause externe tendant à solliciter la barre de contrôle à sortir du coeur du réacteur.

Dans des réacteurs de ce type, le réglage en puissance de la chaudière nucléaire est obtenu en introduisant plus ou moins profondément dans le coeur du réacteur des barres de contrôle ayant pour principale caractéristique un pouvoir absorbant élevé des neutrons. Le dispositif de commande de ces barres de contrôle doit permettre non seulement leur descente et leur montée mais aussi leur chute rapide en cas d'augmentation de la réactivité.

Les réacteurs à eau servent également à la propulsion de navires. Ils subissent donc des risques de chavirement susceptibles de provoquer, dans certaines conditions, une extraction des barres de contrôle hors du coeur du réacteur, ce qui conduirait à des risques et à des dommages très importants.

L'extraction des barres de contrôle est encore possible au cas où l'étanchéité de l'enceinte qui contient le mécanisme de commande de la barre de contrôle serait rompue, car il s'en suivrait une dépressurisation rapide de cette enceinte. La dépressurisation aurait pour conséquence l'apparition d'une différence de pression entre l'intérieur de l'enceinte et l'intérieur de la cuve du réacteur. Cette différence de pression provoquerait une poussée considérable sur la barre de contrôle et tendrait à l'éjecter hors du coeur du réacteur. C'est pourquoi on prévoit des dispositifs destinés à empêcher l'éjection des barres de contrôle des réacteurs à eau en cas de dépressurisation de l'enceinte contenant le mécanisme de commande de la barre de contrôle ou en cas de chavirement du réacteur lorsqu'il est embarqué.

Le dispositif d'accouplement entre un organe moteur et un organe récepteur de l'invention est apte à remplir cette fonction. Pour cette application, le dispositif d'accouplement de l'invention est disposé sur la chaîne cinématique interne, entre la barre de contrôle qui est l'organe récepteur, et l'organe moteur. La translation des barres de contrôle est obtenue à partir d'un mouvement de rotation transformé en mouvement de translation par exemple au moyen d'un dispositif vis-écrou. La descente et la remontée normale de la barre de contrôle sont assurées par un moteur d'entraînement. Le couple est transmis de l'organe moteur vers l'organe récepteur; dans ce cas, la transmission est assurée dans les deux sens.

L'arrêt d'urgence du réacteur est assuré par la chute des barres de contrôle. On se trouve donc dans la situation où l'organe récepteur entraîne l'organe moteur sous l'effet du poids des barres de contrôle. Dans ce cas de fonctionnement, le dispositif d'accouplement de l'invention permet, en tournant en roue libre, la chute rapide de chacune des barres de contrôle.

Au cas où les barres de contrôle tendraient à être éjectées du coeur du réacteur, le dispositif d'accouplement bloquerait en rotation l'organe récepteur, ce qui empêcherait l'éjection de la barre de contrôle.

On connaît également (EP—A—0 093 055) un dispositif anti-éjection déblocable pour barres de contrôle de réacteur nucléaire qui permet d'éviter l'éjection des barres de contrôle et de les remonter en exerçant un couple supérieur à une valeur limite, en cas de blocage du mécanisme. Une masse, mobile en translation, supporte des rochets destinés à coopérer avec des cliquets montés sur une roue. Lorsque la masse mobile est en position débrayée, la rotation du rotor est libre dans les deux sens. Lorsque la masse mobile est en position embrayée, cette rotation est libre seulement dans un sens, qui correspond à la chute de la barre de contrôle. Dans l'autre sens, une rotation peut être obtenue si un effort supérieur à la valeur limite est exercé. Toutefois, ce dispositif ne comporte pas de dispositif d'accouplement entre une partie menante et une partie menée.

Le dispositif de l'invention comporte également les caractéristiques de la partie caractérisante de la revendication 1.

L'invention concerne également un réacteur nucléaire comprenant une cuve, un coeur situé dans la cuve, au moins une barre de contrôle, un mécanisme de commande de la barre de contrôle pour introduire cette dernière plus ou moins profondément dans le coeur, ce mécanisme étant logé dans une enceinte fixe solidaire de la cuve du réacteur et comprenant un écrou fixe par rapport à ladite enceinte, et une vis coopérant avec cet écrou, un organe moteur pour entraîner ledit mécanisme de commande, caractérisé en ce qu'il comprend: un dispositif d'accouplement selon la revendication 1 entre ledit organe moteur et un organe récepteur constitué par ladite vis, la couronne d'entraînement étant solidaire de l'organe moteur, la couronne porte-cliquets étant solidaire du mécanisme de commande de la barre de contrôle et la couronne à rochets étant montée fixe dans ladite enceinte solidaire de la cuve.

L'invention concerne par ailleurs un dispositif d'accouplement en rotation entre un organe moteur et un organe récepteur, ce dispositif comprenant les moyens énumérés dans la revendication 1 et étant modifié en ce que l'organe moteur est lié en rotation à la couronne à rochets pour limiter le couple transmis entre ledit organe moteur et ledit organe récepteur.

Enfin, l'invention concerne un dispositif, d'accouplement en rotation entre un organe moteur et au moins un organe récepteur, ce dispositif comprend les caractéristiques énumérés dans la revendication 1 et étant modifié en ce que l'organe moteur est constitué par la couronne d'entraînement, un premier organe récepteur est constitué par la couronne à rochets, et un second organe récepteur est constitué par la couronne porte-cliquets.

Dans ce qui suit, l'invention est exposée plus en détail à l'aide de dessins représentant seulement un mode d'exécution.

la figure 1 représente une vue en coupe de la partie supérieure d'une cuve de réacteur nucléaire équipée d'un dispositif de commande des barres de contrôle comportant un accouplement conforme à l'invention,

la figure 2 représente une vue en coupe à échelle agrandie du mécanisme d'accouplement de la figure 1,

la figure 3 représente une vue en perspective du mécanisme d'accouplement représenté sur les figures 1 et 2,

les figures 4 et 5 sont des vues de détail illustrant le fonctionnement du dispositif de l'invention,

la figure 6 est une vue de détail montrant la fixation des cliquets.

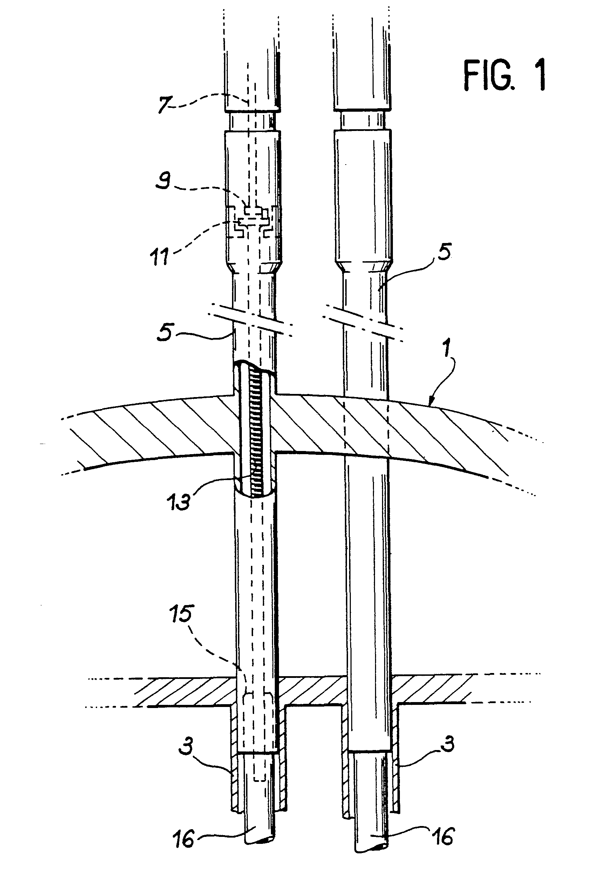

On a représenté sur la figure 1, la partie supérieure de la cuve 1 d'un réacteur nucléaire de type à eau pressurisée. A l'intérieur de la cuve se trouve le coeur (non représenté) constitué par des assemblages combustibles juxtaposés. Au-dessus du coeur se trouve une structure 3 à travers laquelle se déplacement verticalement les barres de contrôle destinées à être introduites plus ou moins profondément dans le coeur. Chaque barre de contrôle (non représentée) est reliée, à sa partie supérieure, à un dispositif de commande de translation disposé à l'intérieur d'une enceinte étanche 5 solidaire de la cuve 1. Le dispositif de commande comporte un moteur, non représenté, situé à la partie supérieure de l'enceinte 5. Ce moteur entraîne l'organe moteur 29 d'un dispositif d'accouplement conforme à l'invention par l'intermédiaire d'un arbre 7 représenté en traits pointillés sur la figure 1. Le couple moteur est transmis de l'organe moteur à l'organe récepteur 11, puis de ce dernier à une vis 13. Cette vis peut donc être entraînée en rotation dans les deux sens. Elle permet de commander la translation vers le haut et vers le bas d'un écrou 15 immobilisé en rotation. Les barres de contrôle sont elles-mêmes solidaires d'une barre 16 fixé à l'écrou 15.

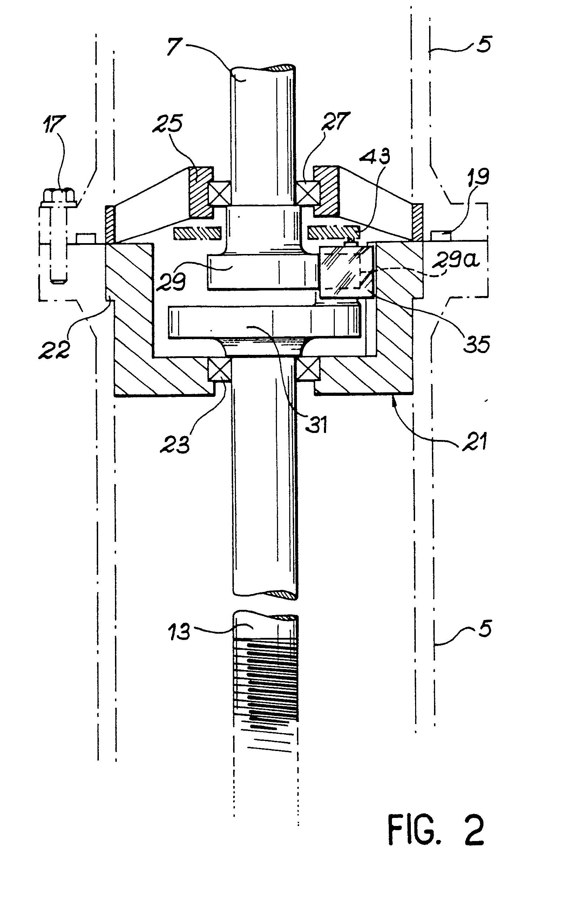

Le dispositif d'accouplement de l'invention 9, 11 représenté schématiquement sur la figure 1, doit remplir plusieurs fonctions. Il doit permettre la descente et la remontée des barres de contrôle pendant le fonctionnement normal du réacteur. Il doit permettre également, comme on l'a expliqué précédemment, la chute des barres de contrôle dans le coeur du réacteur pour permettre son arrêt d'urgence. Enfin, les barres de contrôle étant introduites dans le coeur, le dispositif doit assurer leur blocage dans cette position lorsque des forces qui s'exercent sur elles tendent à les en éjecter. Le dispositif d'accouplement de l'invention représenté plus en détail sur les figures 2 à 5 assure l'ensemble de ces fonctions.

Sur la figure 2, on a représenté en traits mixtes les parois 5 de l'enceinte étanche qui contient le mécanisme de commande d'une barre de contrôle. Elle est réalisée en deux parties raccordées par des brides de fixation assemblées par des vis de serrage 17. Un joint d'étanchéité 19 est prévu entre les deux brides.

La couronne à rochets 21 est disposée dans l'alésage interne de la partie inférieure de l'enceinte 5. Elle est retenue dans cet alésage par un épaulement 22. Un palier 23 monté dans cette couronne assure le guidage en rotation de la vis de commande du mécanisme vis-écrou 13, 15. Au-dessus de la couronne à rochets 21 se trouve un flasque 25 qu comporte un palier de guidage 27 pour l'arbre 7 qui entraîne en rotation l'organe moteur 29.

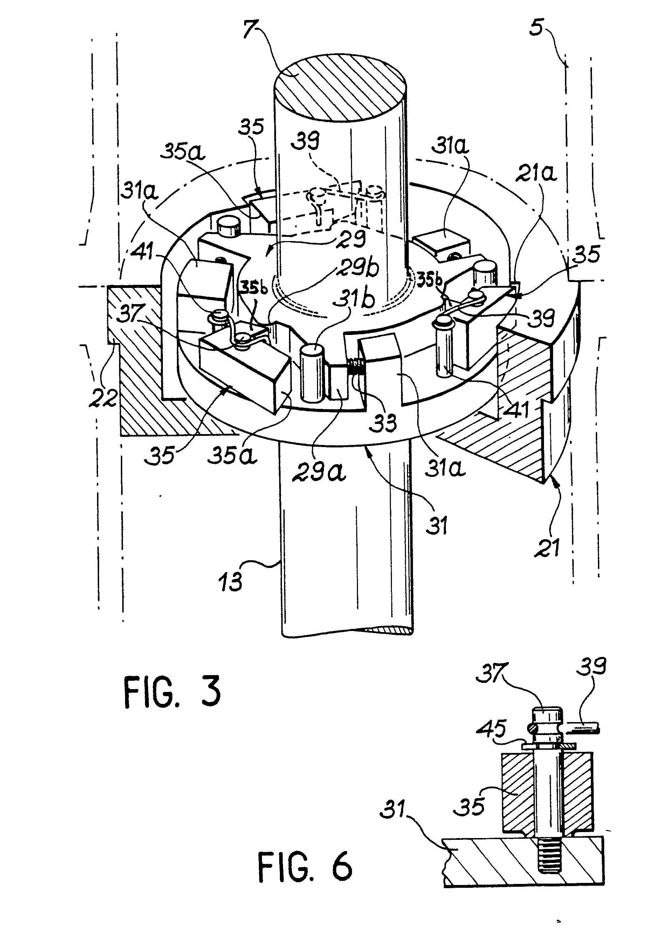

Comme on peut le voir sur les figures 3 à 5, la couronne à rochets 21 comporte des rochets 21a formés sur l'alésage interne de la couronne. La couronne d'entraînement 29, disposée à l'extrémité de l'arbre 7, comporte plusieurs doigts 29a, par exemple trois dans l'exemple de réalisation représenté sur la figure 3. Ces doigts sont disposés sensiblement radialement. Ils comportent une première face dirigée radialement et une deuxième face inclinée par rapport à une direction radiale. La couronne 29 comporte également des profils de came 29b en nombre égal à celui des doigts 29a.

La couronne porte-cliquets 31 comporte des butées 31a et 31b sur sa face supérieure. Dans l'exemple de réalisation représenté, il y a trois paires de butées. Les butées 31a ont une forme prismatique tandis que les butées 31b se présentent comme des pions de section circulaire. Une dépression correspondant à la forme de la section des butées 31b peut être pratiquée dans les doigts 29a afin de répartir la pression de la butée sur le doigt lorsqu'un effort est exercé. Les doigts 29a sont en nombre égal au nombre des paires de

butées 31a, 31b, et sont disposés entre les deux butées d'une paire. Chaque doigt comporte un orifice cylindrique, et chaque butée 31a prismatique comporte un orifice identique qui lui fait face pour y loger un ressort 33 appelé ressort d'armement qui a pour fonction d'écarter le doigt 29a de la butée 31a.

La couronne 31 porte d'autre part des cliquets 35. Il y a autant de cliquets que de doigts 29a, c'est-à-dire trois dans l'exemple représenté. Les cliquets 35 sont situés entre les paires de butées 31a, 31b, sensiblement à mi-distance, mais ceci n'est pas obligatoire. Les cliquets 35 sont montés pivotants sur la couronne 31 grâce à un axe 37.

Comme représenté sur la vue de détail de la figure 6, l'axe 37 comporte un moyen d'arrêt tel qu'un circlips 45.

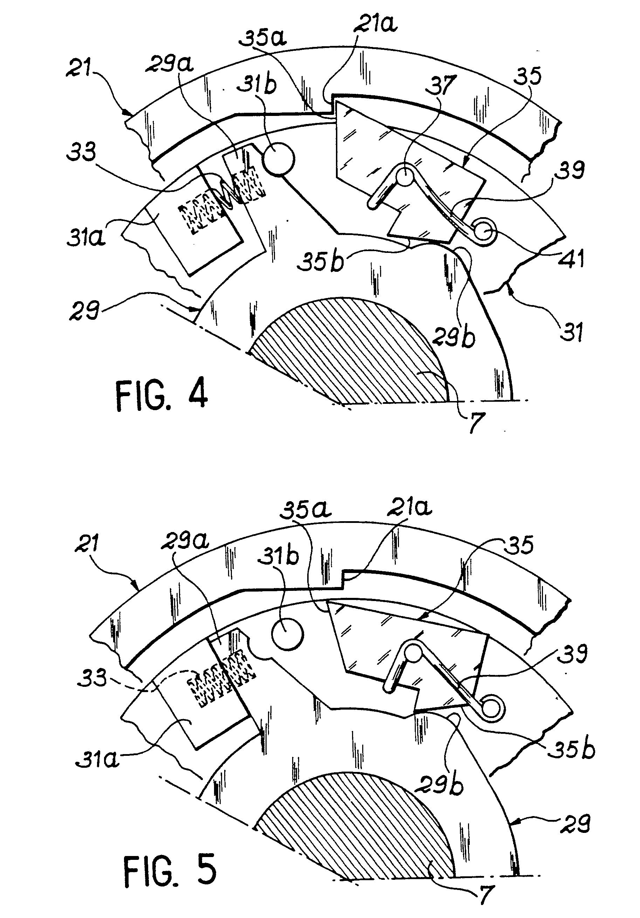

Chaque cliquet comporte une partie frontale ou surface d'arrêt 35a, apte à s'engager avec les rochets 21a de la roue à rochets 21, et un talon 35b. La partie frontale 35a et le talon 35b sont situés de part et d'autre de l'axe 37. Chaque cliquet 35 pivote entre une première position dans laquelle la surface frontale ou d'arrêt 35a est engagée dans un rochet 21a de la couronne à rochets 21 (position représentée sur la figure 4) et une position dégagée dans laquelle cette surface d'arrêt 35a est dégagée des rochets 21a de la couronne à rochets 21. Cette dernière position est représentée sur la figure 5. Ce pivotement du cliquet 35 s'effectue sous l'action de moyens élastiques de rappel 39 et du profil de came 29b de la couronne d'entraînement 29. Lorsque le profil de came 29b entre en contact avec le talon 35b du cliquet sous l'effet d'un mouvement de rotation relatif entre la couronne d'entraînement 29 et la couronne prote-cliquets 31, le profil de came 29b soulève le talon 35b et fait pivoter le cliquet 35, dans le sens trigonométrique. On aboutit ainsi à la position dégagée représentée sur la figure 5. Les moyens élastiques de rappel 39 sont prévus pour solliciter le cliquet vers sa position engagée. Ces moyens sont constitués, dans l'exemple représenté, par un ressort qui prend appui à une première extrémité sur un pion 41 fixé à la couronne porte-cliquets et qui à son autre extrémité prend appui sur le cliquet lui-même après avoir fait le tour de l'axe du cliquet 37.

Selon une variante de réalisation, on prévoit une couronne supplémentaire 43 représentée en traits mixtes sur la figure 2, et qui a pour fonction de retenir les cliquets 35. Cette couronne est disposée dans un plan parallèle à celui de la couronne porte-cliquets 31 et est rendue solidaire avec cette dernière par l'intermédiaire de fixations aménagées sur les butées 31a et 31b de la couronne porte-cliquets.

Le fonctionnement du dispositif est le suivant.

Dans un premier cas de fonctionnement, le couple moteur est transmis par l'arbre 7 et par la couronne d'entraînement 29. Ce couple est transmis dans les deux sens de rotation. Dans sa position de repos, c'est-à-dire en l'absence de couple transmis, le dispositif se trouve dans la position initiale représentée sur la figure 3. Les ressorts d'armement 33 maintiennent les doigts 29a en appui contre les butées cylindriques 31b. Les profils de came 29b de la couronne d'entraînement 29 n'appuient pas sur les talons des cliquets. Ces derniers se trouvent donc dans la position engagée, c'est-à-dire dans la position pour laquelle la surface d'arrêt 35a est en contact avec les rochets 21a de la couronne 21 (position représentée sur les figures 3 et 4).

Lorsqu'un couple est transmis par l'arbre moteur 7 et la couronne d'entraînement 29, les ressorts d'armement 33 sont comprimés. Au cours de cette compression il se produit un déplacement angulaire relatif de la couronne d'entraînement 29 par rapport à la couronne porte-cliquets 31. La persistance du couple résistant de l'arbre récepteur permet de conserver cette position relative entre les couronnes d'entraînement et les porte-cliquets. Ce mouvement relatif a pour effet d'amener les profils de came 29b en contact avec les talons 35b des cliquets 35 et de dégager leur partie frontale 35a des rochets 21a. Les cliquets étant en position dégagée, le couple moteur est transmis à la couronne porte-cliquets, et par suite, à l'arbre récepteur, entraînant la vis 13 qui commande le système vis-écrou qui assure la translation de la barre de contrôle.

Dans le sens de rotation contraire, c'est-a-dire dans le sens horaire, à partir de l'état initial défini précédemment, les doigts 29a restent en contact avec les butées cylindriques 31b. Les profils de came 29b n'appuient pas sur les talons 35b des cliquets 35, qui sont donc, sous l'action des ressorts de rappel 39, dans leur position engagée, mais travaillent dans le sens d'échappement. Ils n'interdisent donc pas la rotation de la couronne 31 et de la vis 13. La commande de translation de la barre de contrôle absorbante est donc également assurée pour ce sens de rotation.

Dans un deuxième cas de fonctionnement, les rôles des arbres moteur et récepteur sont inversés. En d'autres termes, l'organe récepteur entraîne l'organe moteur, c'est-à-dire dans lexemple décrit, la vis 13, par l'intermédiaire de la couronne porte-cliquets 31, exerce un couple moteur, tandis que l'arbre 7, solidaire de la couronne d'entraînement 29, exerce un couple résistant ou est désaccouplé. Dans le cas où les barres de contrôle sont soumises, pour une cause quelconque, à une force d'éjection tendant à les faire sortir du coeur du réacteur, le système vis-écrou 13—15 étant réversible, cette force se traduit par un couple exercé sur la vis 13 et par conséquent sur la couronne d'entraînement 31. Compte tenu de l'inclinaison du pas de la vis 13, ce couple est exercé dans le sens trigonométrique observé à partir d'une vue de dessus, comme sur les figures 4 et 5. Comme on l'a rappelé précédemment, lorsque le dispositif de l'invention est dans son état initial, c'est-à-dire au repos, les cliquets 35 sont normalement engagés dans les rochets de la couronne 21. La rotation de cette couronne est donc interdite puisque la couronne 21 est fixe et immobilisée en rotation par rapport à l'enceinte étanche 5. Le couple n'est donc pas transmis à la couronne d'entraînement ni, par suite, à l'arbre 7. L'éjection de la barre de contrôle hors du coeur du réacteur est ainsi empêchée.

On veut par ailleurs permettre l'arrêt d'urgence du réacteur par la chute des barres de contrôle. Les barres tombent, sous l'effet de leur propre poids, beaucoup plus rapidement que par le mécanisme de descente normale commandé par la rotation du moteur. La chute des barres de contrôle est déclenchée par le désaccouplement du moteur. La couronne d'entraînement n'exerce donc plus aucun couple résistant. Les cliquets 35 sont en position engagée, mais ils travaillent dans le sens d'échappement et de ce fait n'interdisent pas le mouvement de rotation de la couronne porte-cliquets 31.

Le dispositif d'accouplement de l'invention peut également assurer la protection d'un élément moteur contre un couple excessif. Pour cette application, la couronne à rochets 21 est liée en rotation à l'arbre moteur. Le couple moteur est donc transmis par l'intermédiaire de la couronne porte-cliquets 31, dans le sens de rotation horaire, aux cliquets 35. L'effort exercé sur les cliquets 35 est lui-même transmis à la couronne porte-cliquets par l'intermédiaire des axes de cliquets 37. Sous l'effet de ce couple moteur, un mouvement de rotation relatif de la couronne porte-cliquets par rapport à la couronne d'entraînement se produit. Ce mouvement relatif tend à rapprocher les doigts d'entraînement 29a des butées 31a et simultanément à appuyer les profils de came 29b sur les talons de cliquets 35b. Cependant, les ressorts d'armement 33 prévus entre les butées 31a et chacun des doigts 29a s'opposent à ce mouvement relatif en exerçant un couple de sens contraire tendant à écarter chaque butée 31a des doigts 29a. La rigidité des ressorts 33 peut être choisie de manière à transmettre un couple de grandeur voulue. Lorsque la grandeur du couple transmis reste inférieure à la valeur limite choisie, le mouvement relatif de la couronne d'entraînement par rapport à la couronne porte-cliquets est suffisamment limité pour que ces cliquets restent en position engagée et que le couple soit transmis. Si le couple moteur transmis devient excessif, c'est-à-dire dépasse la valeur limite par suite par exemple d'un blocage de l'organe résistant ou récepteur, les ressorts d'armement 33 se compriment davantage, de sorte que le mouvement relatif de la couronne d'entraînement par rapport à la couronne porte-cliquets se poursuit jusqu'à l'engagement des profils de came 29b sous les talons 35b des cliquets. Cela provoque le dégagement des surfaces d'arrêt 35a des cliquets, des rochets 21a et donc le débrayage de la couronne à rochets. Le couple transmis par l'organe moteur reste donc en permanence limité à la valeur limite choisie.

Le dispositif d'accouplement de l'invention s'applique également à la transmission d'un couple d'un organe moteur à deux organes récepteurs. Dans cette application, l'organe moteur est lié en rotation à la couronne d'entraînement 29.

Un premier récepteur est constitué par la couronne à rochets 21 et un deuxième récepteur par la couronne porte-cliquets 31.

Lorsque l'élément moteur tourne dans le sens horaire, la couronne d'entraînement 29 n'entraîne que la couronne porte-cliquets 31 par l'intermédiaire des butées cylindriques 31b. Les cliquets fonctionnent par échappement. Le couple moteur n'est donc pas transmis à la couronne à rochets.

Lorsque l'organe moteur tourne dans le sens inverse, c'est-à-dire dans le sens trigonométrique, la couronne d'entraînement 29 entraîne la couronne porte-cliquets 31 par l'intermédiaire des butées 31a, le couple moteur étant transmis des doigts d'entraînement 29a aux butées 31a par l'intermédiaire des ressorts d'armement 33, comme on l'a expliqué précédemment. La rigidité de ces ressorts est déterminée de manière à limiter le couple transmis. Lorsque la valeur du couple moteur est inférieure à la valeur choisie, le deuxième organe récepteur, constitué par la couronne à rochets 21, est entraîné en rotation par l'intermédiaire des cliquets 35 engagés dans les rochets 21a. Lorsque la valeur du couple transmis dépasse la valeur choisie, de manière identique à ce qui a été expliqué plus haut, la pour-suite du mouvement relatif de rotation de la couronne d'entraînement par rapport à la couronne porte-cliquets provoque, en comprimant les ressorts d'armement, l'engagement des profils de came 29b sous les talons 35b des cliquets et, par suite, amène ces derniers en position dégagée. Le deuxième organe récepteur est donc débrayé. On constate donc que dans cette application, l'un des organes récepteurs, à savoir la couronne porte-cliquets, est prioritaire. Dans le sens de rotation horaire, cet organe récepteur prioritaire est seul entraîné. Dans le sens de rotation trigonométrique, il est toujours entraîné, le deuxième organe récepteur, à savoir la roue à rochets, n'étant entraîné que pour un couple inférieur à une valeur limite déterminée.

**Revendications**

1. Dispositif d'accouplement en rotation entre un organe moteur (7; 21; 29) et au moins un organe récepteur (13; 7; 21, 31), comprenant une première couronne (21), dite couronne à rochets comportant au moins un rochet (21a) sur sa face intérieure; une deuxième couronne (31), dite couronne porte-cliquets, une troisième couronne (29) dite couronne d'entraînement, les première, deuxième et troisième couronnes étant disposées concentriquement, la couronne porte-cliquets (31) étant située à l'intérieur de la couronne à rochets (21) et la couronne d'entraînement (29) étant située dans la couronne porte-cliquets (31); au moins un cliquet (35) monté pivotant sur ladite couronne porte-cliquets, ledit cliquet (35) comportant un talon (35b) et une surface d'arrêt (35a), et étant pivotant, sous l'action de moyens élastiques (39) de rappel, entre une position engagée dans laquelle la surface d'arrêt (35a) est encliquetée dans les rochets (21a) de la couronne à rochets (21) et une position dégagée dans laquelle cette surface d'arrêt (35a) est dégagée des rochets (21a), caractérisé en ce que la couronne porte-cliquets (31) comporte au moins une première et une seconde butées (31a, 31b), ladite couronne d'entraînement (29) comportant au moins un doigt d'entraînement (29a) sensiblement radial qui est engagé entre les première et seconde butées (31a, 31b) de la couronne porte-cliquets; et au moins un profil de came (29b) qui, suivant le sens de déplacement angulaire relatif de la couronne d'entraînement (29) par rapport à la couronne porte-cliquets (31), appuie sur le talon (35b) du cliquet (35) pour le faire pivoter vers sa position dégagée, ou relâche le talon (35) qui, sous l'action des moyens élastiques de rappel (39), pivote vers sa position engagée dans laquelle la surface d'arrêt (35a) du cliquet (35) engage l'un des rochets (21a) de la couronne extérieure (21); des moyens élastiques d'armement (33) disposés entre ledit doigt d'entraînement (29a) de la couronne d'entraînement (29) et l'une desdites première et seconde butées (31a, 31b), ces moyens élastiques d'armement (33) tendant à faire tourner la couronne d'entraînement (29) par rapport à la couronne porte-cliquets (31) vers la position où le profil de came (29b) débloque le talon (35b) du cliquet (35).

2. Dispositif selon la revendication 1, caractérisé en ce qu'il comporte une couronne de maintien (43) disposée parallèlement à la couronne porte-cliquets (21) et destinée à maintenir les cliquets (Figure 2).

3. Réacteur nucléaire comprenant une cuve, un coeur situé dans la cuve, au moins une barre de contrôle, un mécanisme de commande de la barre de contrôle pour introduire cette dernière plus ou moins profondément dans le coeur, ce mécanisme étant logé dans une enceinte fixe solidaire de la cuve du réacteur et comprenant un écrou fixe par rapport à ladite enceinte, et une vis coopérant avec cet écrou, un organe moteur pour entraîner ledit mécanisme de commande, caractérisé en ce qu'il comprend un dispositif d'accouplement selon la revendication 1 entre ledit organe moteur et un organe récepteur constitué par ladite vis, ladite couronne d'entraînement (29) étant solidaire de l'organe moteur, la couronne porte-cliquets (31) étant solidaire du mécanisme de commande de la barre de contrôle et la couronne à rochets (21) étant montée fixe dans ladite enceinte solidaire de la cuve.

4. Dispositif d'accouplement en rotation entre un organe moteur (21) et un organe récepteur (7) selon la revendication 1, modifié en ce que l'organe moteur est lié en rotation à la couronne à rochets (21) pour limiter le couple transmis entre ledit organe moteur (21) et ledit organe récepteur (7).

5. Dispositif d'accouplement en rotation entre un organe moteur (29) et au moins un organe récepteur (21, 31), selon la revendication 1, modifié en ce que l'organe moteur est constitué par la couronne d'entraînement (29), un premier organe récepteur étant constitué par la couronne à rochets (21) et un second organe récepteur étant constitué par la couronne porte-cliquets (31).

**Patentansprüche**

1. Drehkupplungsanordnung zwischen einem Motorteil (7; 21; 29) und wenigstens einem Rezeptorteil (13, 7; 21, 31), enthaltend einen ersten Kranz (21), genannt Sperrzahnkranz, der wenigstens einen Sperrzahn (21a) an seiner Innenseite aufweist; einen zweiten Kranz (31), genannt Klinkentragkranz, einen dritten Kranz (29), genannt Mitnehmerkranz, wobei die ersten, zweiten und dritten Kränze konzentrisch angeordnet sind, der Klinkentragkranz (31) innerhalb des Sperrzahnkranzes (21) angeordnet ist und der Mitnehmerkranz (29) in dem Klinkentragkranz (31) angeordnet ist, wobei wenigstens eine Klinke (35) schwenkbar an dem Klinkentragkranz befestigt ist, die Klinke (35) einen Ansatz (35b) und eine Sperrfläche (35a) afuweist und unter der Wirkung elastischer Vorspanneinrichtungen (39) zwischen einer Eingriffsstellung, in der die Sperrfläche (35a) in den Sperrzähnen (21a) des Sperrzahnkranzes (21) eingerastet ist, und einer gelösten Stellung verschwenkbar ist, in der die genannte Sperrfläche (35a) von den Sperrzähnen (21a) gelöst ist, dadurch gekennzeichnet, daß der Klinkentragkranz (31) wenigstens einen ersten und einen zweiten Anschlag (31a, 31b) aufweist, der Mitnehmerkranz (29) wenigstens einen im wesentlichen radialen Mitnehmerfinger (29a) aufweist, der zwischen die ersten und zweiten Anschläge (31a, 31b) des Klinkentragkranzes eingreift, und weiterhin wenigstens ein Nockenprofil (29b) enthält, das je nach relativer Winkelverstellung des Mitnehmerkranzes (29) gegenüber dem Klinkenzahnkranz (31) sich an den Ansatz (35b) der Klinke (35) anlegt, um diese in ihre gelöste Stellung schwenken zu lassen, oder den Ansatz (35b) freigibt, der unter der Wirkung der elastischen Vorspanneinrichtungen (39) in seine Eingriffsstellung schwenkt, in der die Sperrfläche (35a) der Klinke (35) in einen der Sperrzähne (21a) des äußeren Kranzes (21) eingreift, und daß elastische Bewehrungseinrichtungen (33) zwischen dem gennanten Mitnehmerfinger (29a) des Mitnehmerkranzes (29) und einem der genannten ersten und zweiten Anschläge (31a, 31b) angeordnet sind, welche elastischen Bewehrungseinrichtungen (33) dazu neigen, den Mitnehmerkranz (29) gegenüber dem Klinkentragkranz (31) in die Position zu verdrehen, in der das Nockenprofil (29b) den Ansatz (35b) der Klinke (35) entsperrt.

2. Anordnung nach Anspruch 1, dadurch gekennzeichnet, daß sie einen Haltekranz (43) enthält, der parallel zum Klinkentragkranz (21) angeordnet und dazu bestimmt ist, die Klinken zu halten (Fig. 2).

3. Kernreaktor enthaltend ein Gefäß, einen Kern, der sich in dem Gefäß befindet, wenigstens eine Steuerstange, einen Steuermechanismus für die Steuerstange, um letztere mehr oder weniger tief in den Kern einzuführen, welcher Mechanismus in einem festen Behälter angeordnet ist, der mit dem Reaktorgefäß fest verbunden ist und eine Mutter aufweist, die gegenüber dem genannten Behälter fest ist, und eine Schraube, die mit dieser Mutter zusammenwirkt, ein Motorteil, um den gennanten Steuermechanismus anzutreiben, dadurch gekennzeichnet, daß er eine Kupplungsanordnung nach Anspruch 1 zwischen dem genannten Motorteil und einem Rezeptorteil aufweist, das von der genannten Mutter gebildet ist, wobei der genannten Mitnehmerkranz (29) mit dem Motorteil fest verbunden ist, der Klinkentragkranz (31) mit dem Steuermechanismus für die Steuerstange fest verbunden ist und der Sperrzahnkranz (21) fest in dem mit dem Gefäß fest verbundenen Behälter montiert ist.

4. Anordnung zur Drehkupplung zwischen einem Motorteil (21) und einem Rezeptorteil (7) nach Anspruch 1, dadurch modifiziert, daß das Motorteil drehfest mit dem Sperrzahnkranz (21) verbunden ist, um das zwischen dem Motorteil (21) und dem genannten Rezeptorteil (7) übertragene Drehmoment zu begrenzen.

5. Drehkupplungsanordnung zwischen einem Motorteil (29) und wenigstens einem Rezeptorteil (21, 31) nach Anspruch 1, dadurch modifiziert, daß das Motorteil von dem Mitnehmerkranz (29) gebildet ist, ein erstes Rezeptorteil von dem Sperrzahnkranz (21) gebildet ist und ein zweites Rezeptorteil von dem Klinkentragkranz (31) gebildet ist.

**Claims**

1. Coupling device in rotation between a motor member (7, 21, 29) and at least one receiver member (13, 7, 21, 31), comprising a first ring (21), called the ratchet ring having at least one ratchet (21a) on its inner face, a second ring (31), called the pawl holder ring and a third ring (29), called the drive ring, the first, second and third rings being arranged concentrically, the pawl holder ring (31) being located within the ratchet ring (21) and the drive ring (29) being located in the pawl holder ring (31), at least one pawl (35) mounted in pivotable manner on the pawl holder ring, said pawl (35) having a shoulder (35b) and a stop surface (35a) and being pivotable, under the action of elastic restoring means (39), between an engaged position in which the stop surface (35a) is ratched in the ratchets (21a) of the ratchet ring (21) and a disengaged position in which said stop surface (35a) is disengaged from the ratchets (21a), characterized in that the pawl holder ring (31) has at least a first and second stops (31a, 31b), said drive ring (29) having at least one substantially radial driver (29a) engaged between first and second stops (31a, 31b) of the pawl holder ring, and at least one cam contour (29b) which, in the relative angular displacement direction of the drive ring (29) with respect to the pawl holder ring (31) bears on the pawl (35) shoulder (35b) in order to pivot the same towards its engaged position, or the shoulder (35b) is released which, under the action of the elastic restoring means (39), pivots towards its engaged position in which the stop surface (35a) of the pawl (35) engages one of the ratchets (21a) of the outer ring (21), as well as elastic arming means (33) positioned said driver (29a) of the drive ring (29) and one of the said first and second stops (31a, 31b), said elastic arming means (33) tending to rotate the drive ring (29) with respect to the pawl holder ring (31) towards the position where the cam contour (29b) releases the shoulder (35b) of the pawl (35).

2. Device according to claim 1, characterized in that it comprises a maintaining ring (43) arranged parallel to the pawl holder ring (21) and which serves to maintain the pawls in place (Fig. 2).

3. Nuclear reactor comprising a vessel, a core located in the vessel, at least one control rod, a mechanism for controlling the control rod in order to introduce the latter more or less deeply into the core, said mechanism being located in a fixed enclosure integral with the reactor vessel and having a nut fixed with respect to the enclosure, and a screw cooperating with said nut, a motor member for driving the control mechanism, characterized in that it comprises a coupling device according to claim 1 between said motor member and a receiver member constituted by said screw, the drive ring (29) being integral with the motor member, the pawl holder ring (31) being integral with the mechanism for controlling the control means, the ratchet ring (21) being mounted in fixed manner in said enclosure integral with the vessel.

4. Device for coupling in rotation between a motor member (21) and a receiver member (7) according to claim 1 modified in that the motor member is linked in rotation with the ratchet ring (21) to limit the torque transmitted between said motor member (21) and said receiver member (7).

5. Device for coupling in rotation between a motor member (29) and at least one receiver member (21, 31) according to claim 1 modified in that the motor member is constituted by the drive ring (29), a first receiver member being constituted by the ratchet ring (21) and a second receiver member being constituted by the pawl holder ring (31).

FIG. 1

FIG. 2

FIG. 3

FIG. 6

FIG. 4

FIG. 5